# EUROPÄISCHE PATENTSCHRIFT

(11) **EP 0 982 642 B1**
(45) Veröffentlichungstag und Bekanntmachung des Hinweises auf die Patenterteilung: **06.12.2006**
(21) Anmeldenummer: 99810729.6
(22) Anmeldetag: 12.08.1999
(51) Int. Cl.: G05B 19/042, H02J 13/00, H02G 3/08, H02J 3/14

(54) **Verfahren zur Steuerung von Elektro-Installationen in Gebäuden und eine Steuerungsanordnung für die Steuerung von Elektro-Installationen in Gebäuden**
Process for the control of electrical installations in buildings and a control device for the control of electrical installations in buildings
Procédé de commande d'installations électriques dans des bâtiments et dispositif de commande pour la commande d'installations électriques dans des bâtiments

(30) Priorität: 18.08.1998 CH 169498
(43) Veröffentlichungstag der Anmeldung: 01.03.2000
(73) Patentinhaber: Comat AG, 3076 Worb (CH)
(72) Erfinder: Meier, Karl, 8055 Zürich (CH); Kleger, Raymond, 8505 Pfyn (CH)
(74) Vertreter: Gachnang, Hans Rudolf

(56) Entgegenhaltungen:
- WO-A-91/11044
- GB-A- 2 188 799
- US-A- 4 689 493

## Beschreibung

Gegenstand der Erfindung sind ein Verfahren zur Steuerung von Elektro-Installationen in Gebäuden gemäss Oberbegriff des Patenanspruchs 1 und eine Steuerungsanordnung für die Steuerung von Elektro-Installationen in Gebäuden gemäss Oberbegriff des Patentanspruchs 5.

Es ist seit Jahren möglich, mit einer komplexen Installation und damit auch grossen Investitionen viel Komfort in Gebäuden, sei es in privaten oder in geschäftlichen Gebäuden, zu realisieren, damit Energie zu sparen und Sicherheit bezüglich Einbruch und Feuer zu bieten. Durch diese komplexen Installationen sind gewerkeübergreifende Funktionen gefragt, weshalb sich auch im Installationsbereich nun gewerkeübergreifende Bus-Systeme etabliert haben. Diesen im Markt schon etablierten Installations-Ausführungen haftet aber der Nachteil an, dass sie sehr kostspielig und technisch auf den Gewerbe-, Büro- und Geschäftshausbau optimiert sind und kaum die Bauverhältnisse des durchschnittlichen, einfacheren Privatwohnungsbaus berücksichtigen. Im Privatwohnungsbau können sich deshalb am Markt etablierte Bus-Systeme aus technischen und vor allem ökonomischen Gründen nicht durchsetzen, obwohl eine Nachfrage vorhanden ist.

Die US-A-4689493 offenbart eine zentrale Steuervorrichtung für ein Stromversorgungsnetzwerk innerhalb eines Gebäudes. Dabei ist die Steuervorrichtung in einem zentralen Verteiler- oder Sicherungskasten zusammen mit einem Sicherungsblock auf einer Montageschiene angeordnet. Solche Verteilerkästen können in jedem Stockwerk eines Gebäudes oder in jeder Wohnung vorgesehen sein. Die Steuervorrichtung umfasst einen Netzspannungsteil und einen getrennten Kleinspannungsteil mit einem oder mehreren Steuerungsmodulen. An diese können Schalter oder Sensoren angeschlossen werden. Diese werden zum Schalten von Relais für die Stromzufuhr zu Lampen oder Apparaten benutzt.

Zum besseren Verständnis der Erfindung werden vorab verschiedene Begriffe kurz erläutert.

Im Wohnungs-, Gewerbe- und Industriebau spricht man von Gewerken. Unter Gewerk versteht man z.B. die Lichtsteuerung, Storensteuerung, Raumtemperatur-Regelung, Raumüberwachung, z.B. mit Passiv-Infrarot-Bewegungsmeldern. Unter EIB versteht man den Europäischen Integrations Bus, der speziell für die Bedürfnisse im Installationsbereich entwickelt wurde. Unter LON versteht man Local Operating Network. Sensoren sind z.B. Lichtschalter, Passiv-Infrarot-Bewegungsmelder (PIR), Thermostate usw. Aktoren sind z.B. Stellglieder, Relais und Schützen, um eine Lampe oder irgend ein Gerät ein- und auszuschalten, Phasenanschnitt- und Phasenabschnitt-Stellglieder für das Dimmen von Lampen usw. Wenn im folgenden von Komfort, Energieeinsparung und Sicherheit die Rede ist, verstehen wir unter diesen Begriffen folgendes, Komfort: Bei der Beleuchtung sind komfortables Dimmen und eine Lichtszenensteuerung möglich. Die Storen lassen sich komfortabel bedienen. Z.B. gehen durch kurzes Antippen des Tasters die Storen in Schattenstellung, durch langes Antippen schliessen diese ganz. Die WC-Belüftung ist automatisch anzug- und abfallverzögert. Bei der Heizung besteht eine Einzelraum-Temperaturregelung.

Energie einsparen: Durch gewerkeübergreifende Funktionen lässt sich Energie einsparen, weil z.B. die Raumtemperatur automatisch abgesenkt wird, wenn der Raum nicht besetzt ist, oder das Licht ablöscht, wenn der Bewegungsmelder eine gewisse Zeit keine Bewegung mehr im Raum feststellt.

Sicherheit bezüglich Einbruch und Feuer erhöhen: Der gleiche Bewegungsmelder, der im Falle des besetzten Hauses dafür sorgt, dass der Raum schwächer beheizt wird und das Licht nicht brennt, sorgt im Falle von Abwesenheit dafür, dass ein Alarm ausgelöst wird, sollte der Raum durch Einbrecher betreten werden.

Wird der Einbau eines solch komfortbringenden, energiesparenden und sicherheitbringenden Systems erwogen, stellen sich zwei entscheidende Fragen:
- Wie kann der Komfort, das Energiesparen und die Sicherheit bei Neuinstallationen im Wohnungs-, Gewerbeund Industriebau mit vertretbaren Kosten gesteigert werden?
- Wie kann im Renovierungsfall eine bestehende Installation auf einfachste Weise bei tiefen Kosten bezüglich Komfort, Energiesparen und Sicherheit erweitert werden?

Die beiden Fragen werden von Herstellern von Sensoren und Aktoren aber auch Installateuren auf verschiedenste Weise beantwortet.
Einzelsteuerungssysteme ohne Bus. Bei dieser Technik gibt es je ein Steuersystem für Heizung, Lüftung, Klima, ein anderes für Licht, ein weiteres für die Storensteuerung und noch ein anderes für die Raumüberwachung bezüglich Einbruch und Feuer, um nur ein paar Beispiele zu nennen. Jedes dieser Systeme wird separat installiert und verkabelt.
Daraus ergeben sich folgende Nachteile:
Aufwendige Installationen, weil jedes System eine eigene, vom andern System unabhängige Verkabelung erfordert, gewerkeübergreifende Funktionen sind schwierig und kostspielig. Mehrere Steuerungs- und überwachungssysteme verschiedener Hersteller müssen gewartet werden. Sind gewerkeübergreifende Funktionen vorhanden, gibt es bei Störungen immer Probleme, weil der Fehler jeweils zuerst beim anderen Lieferanten vermutet oder gesucht wird. Bei komplexeren Systemen werden die Steuerkomponenten in Unterverteilern montiert. Die Plazierung dieser Unterverteiler kann problematisch und auch ein ästhetisches Problem sein. Der Einbau von Einzelsteuersystemen ohne Bus im Renovierungsfall ist kaum möglich und bedingt eine umfangreiche Neuinstallation.

Einsatz eines Zentralsteuersystems ohne Bus. Bei dieser Technik gibt es ein einziges Steuersystem für Heizung, Lüftung, Klima, Licht, Storensteuerung usw. Nur bei einfacheren Anlagen sind Raumüberwachung bezüglich Einbruch und Feuer in das System integriert. Die Vorteile, die sich aus diesem System ergeben, sind der Zugriff auf Daten verschiedener Gewerke, z.B. Raumtemperatur für Koppelung mit der Storensteuerung, ohne dass eine komplexe Schnittstelle zwischen den einzelnen Steuersystemen notwendig ist. Alle Steuersysteme werden durch einen Hersteller gewartet, und demnach sind auch gewerkeübergreifende Funktionen einfach zu realisieren. Nachteile ergeben sich aus einer sternförmig zur zentralen Steuerung angelegten Verkabelung, d.h. ein grosser Verkabelungsaufwand. Bei komplexeren Systemen werden die Steuerkomponenten in Unterverteilern montiert und die Plazierung dieser Unterverteiler ist problematisch und ästhetisch nicht optimal. Bei Renovierungen ist ein solches System oft nicht einsetzbar.

EIB-, LON- oder andere Bus-Systeme. Bei dieser Technik gibt es viele einzelne Steuersysteme für Heizung, Lüftung Klima, Licht, Storensteuerung und auch Raumüberwachung bezüglich Einbruch und Feuer, die aber alle über das gleiche Bus-System Daten austauschen. Gewerkeübergreifende Funktionen sind relativ einfach realisierbar, aber auch Funktionsänderungen lassen sich teilweise bereits schon über eine Software-Änderung erreichen.
Die Vorteile dieses Systems sind, dass Daten der einzelnen Gewerke, z.B. die Raumtemperatur für Koppelung mit der Storensteuerung, über den Bus jedem Steuersystem zur Verfügung stehen. Die verschiedenen Steuersysteme können auch durch den Installateur (Programmierer), der alle Geräte montiert und programmiert hat, gewartet werden.
Die Nachteile: Die "Intelligenz" des Systems ist sehr fein verteilt. Um Kosten zu sparen, werden eben nicht alle Schalter mit einem Interface ausgerüstet. Sensoren, z.B. Lichtschalter oder Storenbedienungsschalter, und Aktoren verfügen über eine eigene Bus-Ankoppelung, was selbst bei grosser Verbreitung, d.h. grossen Stückzahlen dieser Installations-Philosphie, kostspielig bleiben wird. Das Bus-Kabel muss zu jedem einzelnen Sensor und Aktor geführt werden. Im Privatwohnungsbau lassen sich Aktoren ohne Hohldecken, Brüstungskanäle, Lüftungsschächte und andere Hohlräume vor Ort gar nicht unterbringen und müssen demzufolge wieder zentral in einem Verteiler montiert werden.

Der Gedanke der völlig verteilten Intelligenz von Sensoren und Aktoren direkt vor Ort entfällt damit und führt wieder zu einer sternförmigen Verkabelung. Kombinationen von Schalter-/Steckdose in einer Dose (z.B. in der Schweiz) sind aus technischen Gründen nicht möglich.
Der Einbau von EIB- und LON-Bus-Systemen bei der Renovierung: Ein Grossteil der Sensoren müssen durch Typen mit Schnittstelle ersetzt werden. Zu jedem Sensor und Aktor mit Bus-Ankopplung muss demzufolge ein Bus-Kabel nachgezogen werden, was kostspielig und zum Teil in knapp bemessenen Rohren gar nicht möglich ist. Besteht z.B. im normalen Wohnungsbau eine Unterputz-Kombination von Schalter/Steckdose, so muss die Einerdose durch eine Zweierdose ersetzt werden, weil eine Steckdose kombiniert mit einem Bus-Schalter nicht in einer Dose Platz findet. Wände müssen aufgespitzt werden. Das grösste Problem: Die Plazierung der Aktoren ist im Privatwohnungsbau ohne Hohldecken, Kanäle etc. kaum möglich.

Die Aufgabe der vorliegenden Erfindung besteht nun darin, ein neues Verfahren zu schaffen, welches speziell die Bauverhältnisse des durchschnittlichen Privatwohnungsbaus berücksichtigt, wesentlich ökonomischer und technisch auf diesem Gebiet einsetzbar ist. Eine weitere Aufgabe ist die Schaffung einer Steuerungsanordnung, welche mit geringem Aufwand und Kosten im privaten und gewerblichen Bau eingesetzt werden kann.
Gelöst werden diese Aufgaben durch ein Verfahren zur Steuerung von Elektro-Installationen in Gebäuden gemäss den Merkmalen des Patentanspruchs 1 sowie eine Steuerungsanordnung für die Steuerung von Elektro-Installationen in Gebäuden gemäss den Merkmalen des Patentanspruchs 5.

Die vorliegende Erfindung sieht nun vor, mit einem einzigen Steuerungssystem beispielsweise für Heizung, Lüftung Klima, Licht, Storensteuerung und auch die Raumüberwachung bezüglich Einbruch und Feuer usw. einzusetzen und dieses in den (vorhandenen) Abzweigdosen, wie sie bei Hausinstallationen jeweils für einige Räume gemeinsam und meist in der Decke eines der Räume, meistens im Korridor, eingelassen sind, unterzubringen. Dabei werden die Sensorinterfaces, alle Aktoren mit einer Vor-Ort-Intelligenz in der Abzweigdose untergebracht. Dies hat den Vorteil, dass die Intelligenz der Software und die Hardware für Ein-/Ausgabe von Daten in der Abzweigdose bezüglich allen angeschlossenen Gewerken speziell auf die Bedürfnisse der Komfort-Steigerung, des Energiesparens und der Sicherheit etc. ausgelegt werden können. Diese Intelligenz für die Komfort-Steigerung steht bis zu einem bestimmten Grad auch ohne Bus zu anderen Abzweigdosen der Meteo-Station einem zentralen Steuergerät oder einem Visualisierungsgerät zur Verfügung. Dies ist ganz entscheidend.
Jede Abzweigdose hat eine hohe Intelligenz und erlaubt beispielsweise komfortable Licht- und Storen-Steuerungen aber auch Einzelraumheizung. Sind die einzelnen Abzweigdosen untereinander und mit weiteren Systemen wie Meteo-Modul, Zentralsteuergerät,
Visualisierungs/Leitsystem, PC usw. verbunden, erhöht sich die Funktionalität. Der Bus kann dabei als Master-Slave-System oder als Multi-Master-System ausgeführt sein. Vorteilhaft ist aber beim erfindungsgemässen Verfahren, dass ein hoher Komfort, ja sogar gewerkeübergreifende Funktionen, selbst bei gestörtem oder unterbrochenem Bus, demzufolge auch ohne Bus, erhalten bleiben, weil die Intelligenz in der Abzweigdose so gross ist und verschiedene Gewerke in einer Abzweigdose zusammen kommen

Die Elektro-Installation von der "intelligenten" Abzweigdose zu den Sensoren (z.B. Lichtschaltern) und zu den Steckdosen, Lampenstellen, Storenmotoren, Heizungsventilen usw. bleibt konventionell starkstromorientiert und ohne Bus-Kabel, wobei natürlich Thermostate oder gewisse Sensoren mit Schwachstrom gespeist werden, wie dies schon bis anhin der Fall war. Hierin liegt der entscheidende Unterschied z.B. zu EIB und LON, welche die "Intelligenz" viel feiner verteilen, und zwar bis hinunter zum Sensor und Aktor. Folglich müssen die Bus-Kabel sehr fein verteilt überall hin mitgeführt werden. Der Installationsaufwand der erfindungsgemässen Anlage ist nicht grösser als bei einer einfachen Elektro-Installation ohne Komfortsteuerung. Von der "intelligenten" Abzweigdose weg bleibt die Installation konventionell starkstromorientiert, für gewisse Sensoren und Aktoren konventionell schwachstromorientiert. Mit ganz normalen Schaltern lassen sich auch Storen komfortabel steuern; die Intelligenz dazu ist in der Abzweigdose untergebracht. Eine separate Storensteuerung kann mithin entfallen. Lampen lassen sich mit normalen binären Schaltern (Impulstastern) auch dimmen; die Intelligenz und der Dimm-Aktor dazu sind in der Abzweigdose enthalten.

Ein weiterer Vorteil der "intelligenten" Abzweigdose liegt darin, dass ein komfortabler herkömmlicher Dimm-Aktor verhältnismässig teuer ist und raumweise eine Einerdose für sich allein beansprucht, also nicht kombinierbar ist mit weiteren Schaltern oder gar einer Steckdose. Bei der erfindungsgemässen Installation ist der Dimm-Aktor in der Abzweigdose, wo ein grosser Teil der notwendigen Elektronik bereits zur Verfügung steht bzw. sie dient auch gleichzeitig andern Funktionen und muss nicht speziell für diese Funktion realisiert werden. Der Dimm-Aktor in der Abzweigdose ist also auch billiger als derjenige im Schalter (Impulstaster) und dies bei grösserer Funktionalität.

Alle unterschiedlichen Funktionen einschliesslich die Kommunikation mit einem Zentralsteuergerät, sofern erwünscht und vorhanden, sind durch den einen MikroProzessor oder durch einen programmierbaren Logikbaustein Z.B. PLD, in der intelligenten Abzweigdose realisiert. Der einzige Unterschied zu einer einfachen Installation ohne Intelligenz und ohne Zentralfunktionen besteht in einem zusätzlichen Bus-Kabel, das ohne weiteres zusammen mit den Starkstromdrähten von den Abzweigdosen zum Verteiler, wo z.B. die Zentralsteuerung mit einer Modem-Ankoppelung montiert ist, gezogen wird.

Die_wesentlich weniger aufgesplittete Intelligenz bringt auch grosse ökonomische Vorteile gegenüber EIB und LON, dies weil jede Bus-Ankoppelung mit erheblichen Kosten verbunden ist und weil im Falle von EIB und LON eine Speisung mit galvanischer Trennung nötig ist und ein Prozessor das recht anspruchsvolle Bus-Protokoll mit den Sicherheitsmechanismen abwickeln muss. EIB und LON sind ereignisorientierte Bus-Systeme, die selbständig (ereignisorientiert evtl. zyklisch) Daten senden und empfangen müssen. Einfache und in riesigen Stückzahlen produzierte Starkstrom-Schalter (Sensoren) für die erfindungsgemäss Anlage sind um Faktoren preisgünstiger als Bus-fähige Typen. Ein Aktor mit Schnittstelle (z.B. EIB oder LON) kostet ein Mehrfaches gegenüber der gleichen Funktion in der "intelligenten" Abzweigdose realisiert. Mit der Unterbringung der Aktoren in der Abzweigdose lässt sich diese Installations-Philosophie auch im Privatwohnungsbau durchsetzen. Nebst den ökonomischen Vorteilen gegenüber EIB und LON ist dies der entscheidende Vorteil.

Jede "intelligente" Abzweigdose bzw. die Elektronik in der Abzweigdose wird vor dem Einbau programmiert, kann aber auch jederzeit später über den Bus, so vorhanden, programmiert werden. Dabei stehen standardisierte Software-Module für die zahlreichen Funktionen der einzelnen Gewerke zur Verfügung. Die Programmierung beschränkt sich eigentlich auf ein Parameterisieren des entsprechend ausgewählten Software-Moduls. Dies im Gegensatz zu EIB und LON, wo jeder Aktor und jeder Sensor programmiert werden muss. Schon allein diese Tatsache macht klar, dass mit dem neuen System der Programmieraufwand viel geringer ist. Es kommt bei EIB hinzu, dass gewisse komplexere, gewerkeübergreifende Verknüpfungen nur mit speziellen zusätzlichen und zudem kostspieligen intelligenten Modulen realisierbar sind.

Die Wartung und Störungssuche ist bei der "intelligenten" Abzweigdose viel einfacher als bei EIB und LON mit den unzähligen intelligenten Sensoren und überall versteckten Aktoren.

Im folgenden wird anhand einer komplexen Privathaus-Installation eine mögliche Ausführungsform der Erfindung beschrieben. Es zeigen
- Figur 1: einen Grundriss zweier Stockwerke mit je einer Abzweigdose und einer Bus-Verbindung zwischen den Abzweigdosen und der Zentralsteuerung und

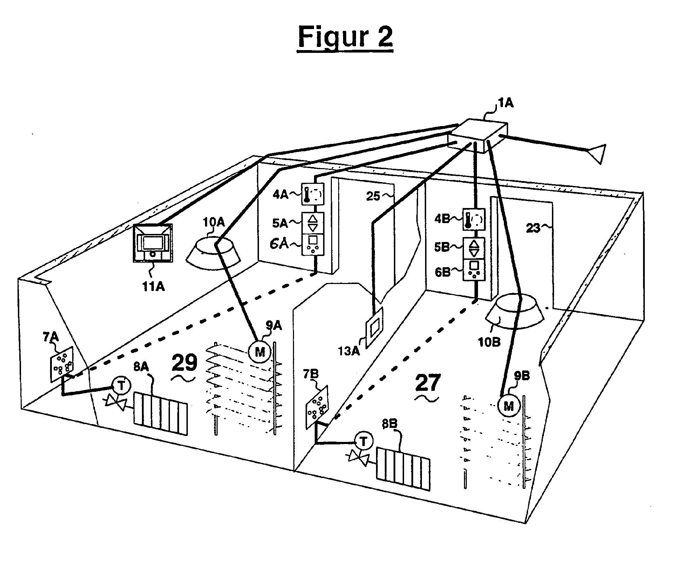

- Figur 2: eine schematische perspektivische Darstellung zweier Räume mit gemeinsamer Abzweigdose.

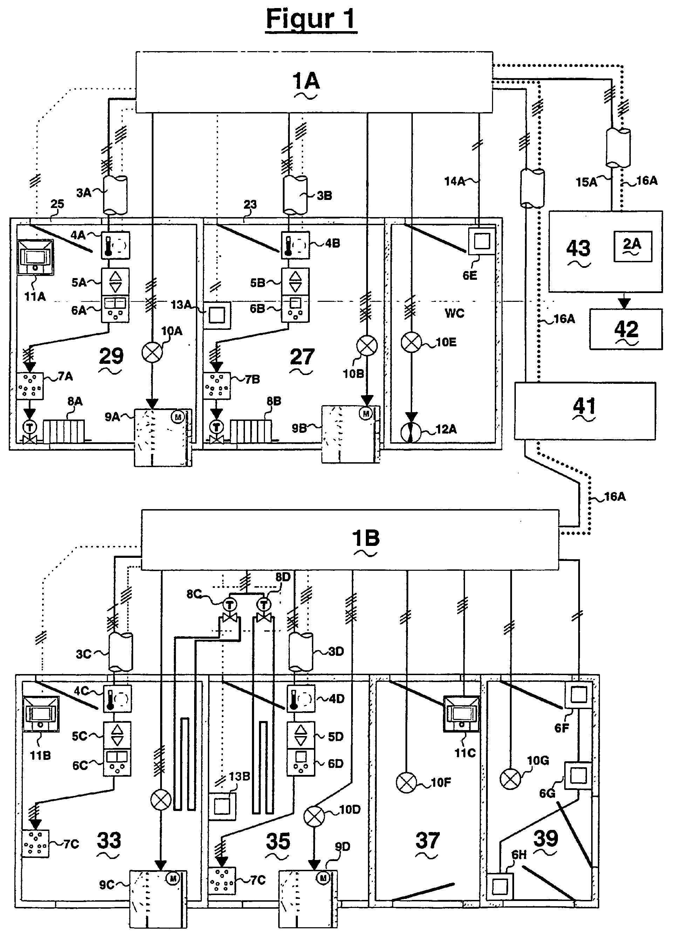

Die Figur 1 zeigt eine nicht abschliessend beschriebene Muster-Installation, wie sie typisch ist für den Privatwohnungs- und Kleingewerbebau. Eine Abzweigdose 1A ist z.B. an der Decke eines der Räume mit zwei Zugängen 23,25 zu zwei Räumen 27,29 angeordnet. Von der Abzweigdose 1A führt ein Rohr 3A mit sieben Starkstromdrähten an der Decke in einem Rohr zusammen mit einem Schwachstromkabel gemeinsam zum Thermostaten 4A und der Schalter-Steckdosenkombination 5A,6A seitlich der Türe 25. Von dort führt das Rohr 3A weiter im Boden zur Steckdose 7A und dann weiter zum thermisch gesteuerten Ventil T beim Heizkörper 8A. Die Regelung der Raumtemperatur erfolgt über einen Regler in der Abzweigdose 1A. Eine der drei Steckdosen in der Steckdosenkombination 7A lässt sich über den Schalter 6A neben der Tür schalten. Beim Schalter 6A sowie der Steckdose 7A handelt es sich um konventionelle Schalter und Dosen. Von der Abzweigdose 1A führt weiter ein Rohr in der Decke zur dimmbaren Lampe 10A (der Dimmaktor ist in der Abzweigdose 1A) und von dort aus zum motorisch angetriebenen Rolladen 9A bzw. zu dessen Antriebsmotor M, der von den Tastern 5A gesteuert wird.

Dabei lässt sich der Rolladen 9A komfortabel über die Intelligenz in der Abzweigdose 1A ansteuern. Eine Steuerung innerhalb des Rolladens 9A oder beim Taster 5A entfällt. Ein weiteres Rohr mit einer Schwachstromleitung führt von der Abzweigdose 1A zum Passiv-Infrarot-Bewegungsmelder 11A, der beispielsweise für ein intelligentes Energiemanagement oder auch zur Raumüberwachung einsetzbar ist. Die Signale des Passiv-Infrarot-Bewegungsmelders 11A werden nicht direkt an einen Verbraucher, z.B. Lampe, weitergeleitet, sondern an die intelligente Abzweigdose 1A. Der Installationsaufwand entspricht folglich genau demjenigen in einem Raum ohne jegliche Komfortsteuerung.

Der zweite Raum 27 weist im Unterschied zum ersten Raum eine Steckdose 7B ohne separat gesteuertem Abgang auf. Anstelle des Passiv-Infrarot-Bewegungsmelders ist ein Nottaster 13A vorgesehen, mit dem bei Gefahr Alarm ausgelöst werden kann. Die übrigen Verbraucher sind mit gleichen Bezugszeichen, jedoch mit Index B versehen.

Zum dritten Raum, dem WC, führt aus der Abzweigdose 1A wiederum eine Leitung 14A zur Lampe 10E und von dort weiter zu einem Ventilator 12A. Eine Starkstromleitung führt von der Abzweigdose zu einem Schalter 6E. Dieser dient dazu, das Licht und den Ventilator einzuschalten. Letzterer kann verzögert ein- und abfallverzögert ausgeschaltet werden. Das verzögerte Ein- und Ausschalten des Ventilators 12A erfolgt direkt aus der Abzweigdose 1A durch die dort untergebrachte Mikroprozessor-Steuerung oder den programmierbaren Logikbaustein und zugeordneter Stark- und Schwachstromrelais.

Die Räume 33,35,37 und 39 des oberen Stockwerks verfügen über eine Bodenheizung, deren Ventile 8C, 8D durch eine Starkstromleitung mit der Abzweigdose 1B im oberen Stockwerk verbunden sind. Im Treppenhaus 37 ist ein Passiv-Infrarot-Bewegungsmelder (PIR) 11C installiert, der durch eine Starkstromleitung in Verbindung mit der Abzweigdose 1B steht. Letzterer steuert die Lampe 10F, wenn eine Bewegung festgestellt wird. Die Schaltung der Lampe für eine bestimmte Zeit (Treppenhausautomat) erfolgt allerdings nicht im PIR 11C, sondern in der Abzweigdose 1B. Eine direkte Verbindung zwischen dem PIR 11C und der Lampe 10F ist folglich nicht notwendig. Alle übrigen Verbraucher in diesen Räumen sind mit korrespondierenden Bezugszeichen zu denjenigen im Untergeschoss, jedoch mit Indices C, D, f und G bezeichnet.

Im Korridor 39 sind gesamthaft drei Taster 6F,6G und 6H installiert, die alle an einer gemeinsamen Starkstromleitung mit der Abzweigdose 1B verbunden sind. Der softwaremässig realisierte Schrittschalter dazu befindet sich innerhalb der Abzweigdose 1B.

Die beiden Abzweigdosen 1A und 1B in den beiden Stockwerken können unabhängig voneinander mit einem Elektroverteiler 2A verbunden sein (vgl. Figur 1).

In der Ausgestaltung der Erfindung gemäss Figur 1 sind die beiden Abzweigdosen 1A und 1B durch eine Starkstromleitung 15A und eine im gleichen Rohr vorhandene Busleitung 16A miteinander verbunden. Dies bedeutet, dass der in den Abzweigdosen 1A und 1B eingebaute Mikroprozessor mit den Sensorinterfaces, Relais, Dimmern etc. ebenfalls miteinander verbunden sind. Die Speisung der beiden Abzweigdosen 1A und 1B erfolgt über ein freies Aderpaar im Buskabel 16A; sie kann auch direkt durch das Starkstromnetz erfolgen.

Um erweiterte, gewerkeübergreifende Verknüpfungen zu erhalten, kann eine Meteo-Station 41 Wind, Regen Sonneneinstrahlung, Frost usw. erfassen und diese Daten den Abzweigdosen 1A und 1B übermitteln. Natürlich sind noch viele andere intelligente Interfaces möglich, die erweiterte Informationen direkt den Abzweigdosen 1A und 1B übermitteln oder aber über den Bus 16A die Zentralsteuerung mit Daten versorgen. Um ein Beispiel zu nennen, könnte eine Zutrittskontrollanlage bzw. deren Mikroprozessor eingesetzt werden.

Im Elektroverteiler 43, wie er beispielsweise im Keller eines Gebäudes untergebracht ist, kann die zentrale Steuerung 2A eingebaut sein, mit der die gewerkeübergreifenden Funktionen in den Abzweigdosen lA,lB erweitert werden können. Damit ist z.B. bei Abwesenheit der Bewohner des Hauses eine Belegungsvortäuschung im Gebäude möglich, indem die Beleuchtung gewisser Zimmer abends aktiviert und die Storen tagsüber geöffnet werden. Auch die Raumtemperatur-Sollwerte lassen sich auf diese Weise zentral vorgeben und die tatsächliche Raumtemperatur zentral visualisieren.

In einer bevorzugten Ausführung der Erfindung wird die Intelligenz der einzelnen Abzweigdosen 1A, 1B etc. zu einem Multi-Master-System anstelle eines Master-Slave-Systems, wie oben beschrieben, erweitert. Dadurch erübrigt sich eine zentrale Steuerung.

Selbstverständlich sind nicht alle Möglichkeiten der Steuerung abschliessend beschrieben worden. Diese lassen sich individuell erweitern und auch nachträglich an die Bedürfnisse der Bewohner des Gebäudes anpassen und ergänzen. Sowohl die Erweiterung als auch die Anpassung können ohne zusätzliche bauliche Änderungen des Hauses erfolgen; sie wird durch eine entsprechende Programmierung der intelligenten Abzweigdosen 1A,1B oder der Zentralsteuerung 2A realisiert.

## Patentansprüche

1. Verfahren zur Steuerung von Elektro-Installationen in Gebäuden, bei denen die Stromzufuhr zu mehreren elektrischen Stark- und Schwachstromverbrauchern eines oder mehrerer Räume von einer gemeinsamen Abzweigdose aus sternförmig von einer Mikroprozessorsteuerung bzw. einem Logikbaustein erfolgt, **dadurch gekennzeichnet, dass** die Mikroprozessorsteuerung bzw. der Logikbaustein und mehrere Stellglieder in der gemeinsamen Abzweigdose angeordnet werden, und dass diese Mikroprozessorsteuerung bzw. dieser Logikbaustein mittels dieser Stellglieder die Stromzufuhr zu den elektrischen Stark- und Schwachstromverbrauchern steuert.

2. Verfahren nach Anspruch 1, **dadurch gekennzeichnet, dass** die Mikroprozessorsteuerung bzw. der Logikbaustein Informationen von Sensoren in den Räumen und/oder von Sensoren eines Meteo-Moduls und/oder Steuerbefehle einer Zentralsteuerung auswertet und die Stark- und Schwachstromverbraucher in Abhängigkeit dieser Informationen ansteuert.

3. Verfahren nach Anspruch 2, **dadurch gekennzeichnet, dass** die Mikroprozessorsteuerung bzw. der Logikbaustein in Abhängigkeit der an die Stellglieder angeschlossenen Stark- und Schwachstromverbraucher und der Sensoren programmiert bzw. parametrisiert wird.

4. Verfahren nach Anspruch 3, **dadurch gekennzeichnet, dass** mindestens eines der Stellglieder als Dimmaktor parametrisiert wird.

5. Steueranordnung zur Steuerung von Elektro-Installationen in Gebäuden, bei denen die Stromzufuhr zu mehreren elektrischen Stark- und Schwachstromverbrauchern eines oder mehrerer Räume von einer gemeinsamen Abzweigdos aus sternförmig von einer Mikroprozessorsteuerung bzw. einem Logikbaustein erfolgt, **dadurch gekennzeichnet, dass** in der gemeinsamen Abzweigdose die Mikroprozessor-Steuerung oder der programmierbare Logikbaustein und von dieser Mikroprozessor-Steuerung oder diesem programmierbaren Logikbaustein kontrollierbare Stellglieder zum Ansteuern der Stark- und Schwachstromverbraucher angeordnet sind.

6. Steueranordnung nach Anspruch 5, **dadurch gekennzeichnet, dass** die Mikroprozessor-Steuerung bzw. der programmierbare Logikbaustein parametrierbar und autonom funktionsfähig ist.

7. Steueranordnung nach einem der Ansprüche 5 oder 6, **dadurch gekennzeichnet, dass** mindestens eines der Stellglieder ein Dimm-Aktor ist.

8. Steueranordnung nach einem der Ansprüche 5 bis 7, **dadurch gekennzeichnet, dass** eine Schnittstelle für die Kommunikation mit weiteren Steueranordnungen und/oder mit einer Zentralsteuerung und/oder mit einem Visualisierungsgerät und/oder einem PC vorgesehen ist.

## Claims

1. Method for controlling electric installations in buildings, where the power supply to a plurality of heavy and light electric current consumers in one or in a plurality of rooms is effected in a radial manner from a common junction box by a microprocessor controlling means or respectively a logical unit, **characterised in that** the microprocessor controlling means or respectively the logical unit and a plurality of actuators are disposed in the common junction box, and **in that** the said microprocessor controlling means or respectively the said logical unit controls the power supply to the heavy and light electric current consumers through the intermediary of the said actuators.

2. Method according to claim 1, **characterised in that** the microprocessor controlling means or respectively the logical unit evaluates data from sensors in the rooms and/or from sensors of a meteorological module and/or control instructions from a centralised control means and activates the heavy and light current consumers in dependence on the said data.

3. Method according to claim 2, **characterised in that** the microprocessor controlling means or respectively the logical unit is programmed or respectively is parameterised in dependence on the heavy and light current consumers that are connected to the actuators and on the sensors.

4. Method according to claim 3, **characterised in that** at least one of the actuators is parameterised as a dimming actuator.

5. Control arrangement for controlling electric installations in buildings, where the power supply to a plurality of heavy and light electric current consumers in one or in a plurality of rooms is effected in a radial manner from one common junction box by a microprocessor controlling means or respectively a logical unit, **characterised in that** the microprocessor controlling means or the programmable logical unit and actuators that are controllable by the said microprocessor controlling means and the said programmable logical unit are disposed in the common junction box.

6. Control arrangement according to claim 5, **characterised in that** the microprocessor controlling means or respectively the programmable logical unit is parameterisable and capable of operating in an independent manner.

7. Control arrangement according to one of claims 5 or 6, **characterised in that** at least one of the actuators is a dimming actuator,

8. Control arrangement according to one of claims 5 to 7, **characterised in that** an interface is provided for communication with additional control arrangements and/or with a centralised control means and/or with a visualisation device and/or with a PC.

## Revendications

1. Procédé de commande d'installations électriques dans des bâtiments dans lesquels l'amenée de courant à plusieurs consommateurs électriques à courant fort et courant faible d'une ou plusieurs pièces est réalisée en étoile à partir d'une boîte de dérivation commune par une commande à microprocesseur ou un composant logique, **caractérisé par le fait que** la commande à microprocesseur ou le composant logique et plusieurs actionneurs sont disposés dans la boîte de dérivation commune et que cette commande à microprocesseur ou ce composant logique commande l'amenée de courant aux consommateurs à courant fort et courant faible au moyen de ces actionneurs.

2. Procédé selon la revendication 1, **caractérisé par le fait que** la commande à microprocesseur ou le composant logique évalue des informations de capteurs dans les pièces et/ou de capteurs d'un module météo et/ou des instructions de commande d'une commande centrale et commande les consommateurs à courant fort et courant faible en fonction de ces informations.

3. Procédé selon la revendication 2, **caractérisé par le fait que** la commande à microprocesseur ou le composant logique est programmé(e) ou paramétré(e) en fonction des consommateurs à courant fort et courant faible raccordés aux actionneurs et des capteurs.

4. Procédé selon la revendication 3, **caractérisé par le fait qu'**au moins un des actionneurs est paramétré en tant que variateur de lumière.

5. Dispositif de commande pour la commande d'installations électriques dans des bâtiments dans lesquels l'amenée de courant à plusieurs consommateurs électriques à courant fort et courant faible d'une ou plusieurs pièces est réalisée en étoile à partir d'une boîte de dérivation commune par une commande à microprocesseur ou un composant logique, **caractérisé par le fait que** la commande à microprocesseur ou le composant logique et des actionneurs contrôlables par cette commande à microprocesseur ou ce composant logique pour la commande des consommateurs à courant fort et courant faible sont disposés dans la boîte de dérivation commune.

6. Dispositif de commande selon la revendication 5, **caractérisé par le fait que** la commande à microprocesseur ou le composant logique est paramétrable et capable de fonctionner de manière autonome.

7. Dispositif de commande selon l'une des revendications 5 ou 6, **caractérisé par le fait qu'**au moins un des actionneurs est un variateur de lumière.

8. Dispositif de commande selon l'une des revendications 5 à 7, **caractérisé par le fait qu'**il est prévu une interface pour la communication avec d'autres dispositifs de commande et/ou avec une commande centrale et/ou avec un appareil de visualisation et/ou un PC.
